# DEMANDE DE BREVET EUROPEEN

(11) **EP 3 795 446 A1**
(43) Date de publication de la demande: **24.03.2021**
(21) Numéro de dépôt: 20196810.4
(22) Date de dépôt: 18.09.2020
(51) Int. Cl.: B61D 27/00, B60H 1/00

(54) **VOITURE DE TRANSPORT DE VOYAGEURS COMPRENANT AU MOINS UN VENTILATEUR CHAUFFANT, VÉHICULE ET PROCÉDÉ D'AJUSTEMENT DE LA TEMPÉRATURE DE L'AIR ASSOCIÉ**

(30) Priorité: 19.09.2019 FR 1910348
(71) Demandeur: ALSTOM Transport Technologies, 93400 Saint-Ouen (FR)
(72) Inventeur: DO, Huu-Thi, 17300 ROCHEFORT (FR)
(74) Mandataire: Lavoix

(57) **Abrégé**

La voiture (12) de transport de voyageurs, par exemple une voiture ferroviaire de transport de voyageurs, comporte un plafond (14), un plancher (16), et deux parois latérales (18) définissant un compartiment voyageur (20). La voiture (12) comprend en outre :
- un ensemble de distribution (24) d'air conditionné pour l'injection d'air conditionné dans le compartiment voyageur (20), l'ensemble de distribution (24) comprenant au moins une sortie d'air (30) débouchant sur le plafond (14), et
- au moins un ventilateur chauffant (26) disposé à l'intérieur du compartiment voyageur (20), à proximité du plancher (16), chaque ventilateur chauffant (26) étant agencé pour force la circulation de l'air présent dans le compartiment voyageur (20) en le chauffant.

## Description

La présente invention concerne une voiture de transport de voyageurs, notamment voiture ferroviaire de transport de voyageurs, la voiture comportant un plafond, un plancher, et deux parois latérales définissant un compartiment voyageur, la voiture comprenant un ensemble de distribution d'air conditionné pour souffler de l'air conditionné dans le compartiment voyageur, l'ensemble de distribution comprenant au moins une sortie d'air débouchant sur le plafond.

Il est possible d'équiper une voiture de transport de voyageurs d'un ensemble de distribution d'air destiné à souffler de l'air chaud ou froid dans le compartiment voyageur afin d'ajuster la température dans le compartiment voyageur.

Cependant, l'air chaud soufflé par l'ensemble de distribution a tendance à rester près du plafond sans descendre au niveau des voyageurs. Si la température de l'air soufflé dans le compartiment voyageur est augmentée, l'air chaud reste toujours près du plafond et il se crée un gradient de température dans le compartiment voyageur, sans pour autant augmenter la température de l'air à hauteur des voyageurs.

Un des buts de l'invention est de fournir une voiture de transport apte à créer une température élevée homogène dans le compartiment voyageur.

A cet effet, l'invention a pour objet une voiture de transport de voyageurs, par exemple une voiture ferroviaire de transport de voyageurs, la voiture comportant un plafond, un plancher, et deux parois latérales définissant un compartiment voyageur, la voiture comprenant :
- un ensemble de distribution d'air conditionné pour l'injection d'air conditionné dans le compartiment voyageur, l'ensemble de distribution comprenant au moins une sortie d'air débouchant sur le plafond, et
- au moins un ventilateur chauffant disposé à l'intérieur du compartiment voyageur, à proximité du plancher, chaque ventilateur chauffant étant agencé pour force la circulation de l'air présent dans le compartiment voyageur en le chauffant.

Selon des modes de réalisation particuliers, la voiture de transport de voyageurs peut comprendre une ou plusieurs des caractéristiques optionnelles suivantes, prise(s) isolément ou suivant toute combinaison techniquement possible :
- l'ensemble de distribution d'air est dépourvu de conduit alimentant chaque ventilateur chauffant en air conditionné ;
- l'ensemble de distribution d'air est alimenté en air conditionné par une unité de climatisation possédant un mode « chaud » pour réchauffer l'air du compartiment voyageur et un mode « froid » pour refroidir l'air du compartiment voyageur, chaque ventilateur chauffant étant activé uniquement lorsque l'unité de climatisation est en mode « chaud » ;

- chaque ventilateur chauffant est apte à commuter entre un état de marche et un état d'arrêt, le ventilateur chauffant occupant l'état de marche lorsque la température dans le compartiment passager est inférieure à une température cible (T_c), le ventilateur chauffant occupant l'état d'arrêt lorsque la température dans le compartiment passager est supérieure à la température cible (T_c) ;
- l'unité de climatisation est configurée pour maintenir la température de sortie (T_s) de l'air conditionné inférieure à une température de sortie maximale (T_s_max) prédéterminée ;
- la température de sortie maximale (T_s_max) est définie par l'équation T_s_max - T_c = Delta_T, Delta_T étant supérieure ou égale à zéro ; et
- au moins une dite sortie d'air de l'ensemble de distribution d'air est orientée de manière à générer un flux d'air s'écoulant dans le compartiment voyageur vers un ventilateur chauffant correspondant.

L'invention a également pour objet un véhicule, notamment véhicule ferroviaire, comportant au moins une voiture de transport de voyageurs telle que définie ci-dessus.

L'invention a en outre pour objet un procédé d'ajustement de la température de l'air dans le compartiment voyageur d'une voiture, le procédé d'ajustement comportant l'injection d'air conditionné dans le compartiment voyageur à l'aide de l'ensemble de distribution d'air, et le captage et le chauffage d'air présent dans le compartiment voyageur à l'aide de chaque ventilateur chauffant.

Selon un mode de mise en œuvre particulier :
- le procédé comprend le maintien de l'air conditionné injecté dans le compartiment voyageur par l'ensemble de distribution d'air à une température de sortie (T_s) inférieure à une température de sortie maximale (T_s_max) prédéterminée.

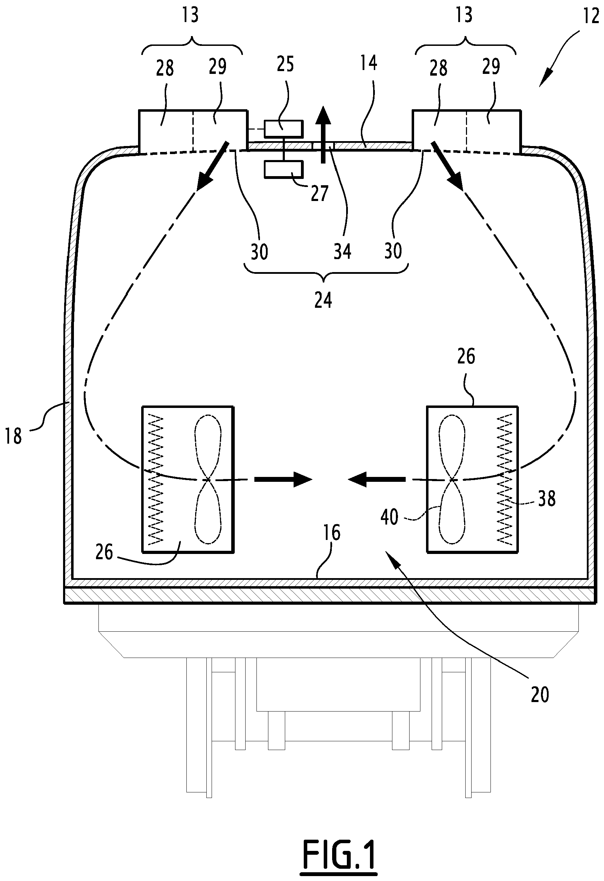

L'invention et ses avantages seront mieux compris à la lecture de la description qui va suivre, donnée uniquement à titre d'exemple non limitatif, et faite en se référant au dessin annexé, sur lequel [Fig 1] la Figure unique représente une vue schématique en section d'une voiture de transport de voyageurs.

Sur la Figure est illustré un véhicule qui comporte une voiture de transport 12 de voyageurs. Le véhicule est en particulier un véhicule ferroviaire, la voiture de transport 12 étant une voiture ferroviaire de transport de voyageurs. En variante, le véhicule est un véhicule routier, par exemple un bus ou un car.

Le véhicule peut comprendre plusieurs voitures de transport 12 de voyageurs disposées à la file en étant reliées entre elles pour former un train.

Le véhicule comporte une unité de climatisation 13 configurée pour chauffer et/ou refroidir de l'air destiné à être soufflé dans la voiture de transport 12.

La voiture 12 comporte un plafond 14, un plancher 16, et deux parois latérales 18 définissant un compartiment voyageur 20.

La voiture 12 comprend un ensemble de distribution 24 d'air conditionné et au moins un ventilateur chauffant 26 disposé à l'intérieur du compartiment voyageur 20.

L'unité de climatisation 13 est par exemple située à l'extérieur du compartiment voyageur 20.

L'unité de climatisation 13 est disposée par exemple sur un toit de la voiture de transport 12. Lorsque le véhicule comprend plusieurs voitures de transport à la file, l'unité de climatisation 13 pourrait être montée sur une autre voiture en étant reliée à la voiture de transport 12 par un circuit aéraulique.

L'unité de climatisation 13 est reliée fluidiquement au compartiment voyageur 20 par l'intermédiaire de l'ensemble de distribution 24.

L'ensemble de distribution 24 d'air est configuré pour soufflé de l'air conditionné dans le compartiment voyageur 20.

L'ensemble de distribution 24 d'air est alimenté en air conditionné par l'unité de climatisation 13.

L'unité de climatisation 13 possède un mode « chaud » pour réchauffer l'air du compartiment voyageur 20 et un mode « froid » pour refroidir l'air du compartiment voyageur 20.

L'unité de climatisation 13 est commandée par exemple par un système de commande 25.

Ce système de commande 25 est relié par exemple à des capteurs de température 27 présents dans la voiture de transport 12, afin de déterminer s'il convient de refroidir ou de réchauffer le compartiment voyageur 20.

Le système de commande 25 est par exemple configuré pour prendre en compte une température interne à l'intérieur du compartiment voyageur 20, une température externe, un ensoleillement...

Dans un exemple de réalisation, le système de commande 25 est un système de commande et de gestion de train, aussi connu sous le nom de TCMS pour « Train Control and Management System ».

L'unité de climatisation 13 comprend par exemple un dispositif de production de chaud 28 apte à chauffer de l'air et un dispositif de production de froid 29 apte à refroidir de l'air.

L'unité de climatisation 13 est configurée pour maintenir la température de sortie T_s de l'air conditionné soufflé en sortie de l'ensemble de distribution 24 inférieure à une température de sortie maximale T_s_max prédéterminée. Ceci évite un gradient de température élevé dans le compartiment voyageur 20 avec de l'air chaud accumulé près du plafond 14 et de l'air froid accumulé près du plancher 16, ce qui est une source d'inconfort pour les passagers.

L'ensemble de distribution 24 comprend par exemple au moins une sortie d'air 30 débouchant sur le plafond 14 en étant configurée pour générer un flux d'air s'écoulant dans le compartiment voyageur 20 en direction d'un ventilateur chauffant 26 associé.

Dans l'exemple illustré, la sortie d'air 30 est orientée pour générer un flux d'air s'écoulant vers le bas le long d'une paroi latérale 18 en direction d'un ventilateur chauffant 26 associé situé à proximité du coin entre cette paroi latérale 18 et le plancher 16.

L'air traité par l'unité de climatisation 13 est de l'air provenant de l'extérieur de la voiture de transport 12 et/ou de l'air recyclé provenant du compartiment voyageur 20.

Avantageusement, l'ensemble de distribution 24 comprend au moins une entrée de recyclage 34 s'alimentant en air dans le compartiment voyageur 20, et située de préférence sur le plafond 14, pour le recyclage d'air du compartiment voyageur 20.

Au moins une sortie d'air 30 est orientée de manière à générer un flux d'air s'écoulant dans le compartiment voyageur 20 vers un ventilateur chauffant 26 correspondant.

Chaque ventilateur chauffant 26 est séparé de l'ensemble de distribution 24. L'ensemble de distribution 24 d'air est dépourvu de conduit pour alimenter chaque ventilateur chauffant 26 en air conditionné.

Chaque ventilateur chauffant 26 est situé entièrement à l'intérieur du compartiment voyageur 20.

La voiture de transport 12 est dépourvue de conduit ou de circuit aéraulique pour amener de l'air à chauffer au ventilateur chauffant 26 et de conduit ou de circuit aéraulique pour injecter de l'air chauffé par le ventilateur chauffant 26 dans le compartiment voyageur 20.

Chaque ventilateur chauffant 26 est configuré pour forcer une circulation d'air dans le compartiment voyageur 20 tout en chauffant l'air du compartiment voyageur 20. Chaque ventilateur chauffant 26 est configuré pour brasser l'air dans le compartiment voyageur 20 en le chauffant.

Chaque ventilateur chauffant 26 comprend une source de chaleur 38 apte à chauffer de l'air autour d'elle, et une hélice 40 pour forcer la circulation d'air du compartiment voyageur 20, en générant un flux d'air forcé autour de la source de chaleur 38. Un tel ventilateur chauffant 26 est connu sous le terme « aérotherme ».

La source de chaleur 38 est par exemple une résistance électrique.

De préférence, chaque ventilateur chauffant 26 comprend un carénage délimitant un passage pour l'air, à l'intérieur duquel sont disposés la source de chaleur 38 et l'hélice 40.

Le débit d'air du ventilateur chauffant 26 est par exemple compris entre 75 m³/h et 300 m³/h. La puissance du ventilateur chauffant 26 est par exemple comprise entre 400 W et 1000 W.

Le ou chaque ventilateur chauffant 26 est disposé à proximité du plancher 16. La distance entre le ventilateur chauffant 26 et le plancher 16 est par exemple inférieure à 70 cm, avantageusement inférieure à 30 cm, et encore plus avantageusement inférieure à 20 cm. Selon un exemple de l'invention, le ou chaque ventilateur chauffant 26 est directement disposé sur le plancher 16.

Chaque ventilateur chauffant 26 est apte à commuter entre un état de marche et un état d'arrêt. Le ventilateur chauffant 26 occupe l'état de marche lorsque la température dans le compartiment passager 20 est inférieure à une température cible T_c. Le ventilateur chauffant 26 occupe l'état d'arrêt lorsque la température dans le compartiment passager 20 est supérieure à la température cible T_c.

La température de sortie maximale T_s_max est fonction de la température cible T_c. Dans un exemple de réalisation, un écart Delta_T entre la température de sortie maximale T_s_max et la température cible T_c est prédéterminé. L'écart Delta_T est par exemple égale à une valeur comprise entre 0°C et 5°C.

Lorsque la somme des puissances des ventilateurs chauffants 26 est considérée comme suffisante, l'écart Delta_T est égal à 0°C (Delta_T=0°C) et alors la température de sortie maximale T_s_max est égale à la température cible T_c(T_s_max=T_c). En variante, la valeur de de l'écart Delta_T est fonction de la valeur de T_c.

Dans un exemple de réalisation, chaque ventilateur chauffant 26 est activé uniquement lorsque l'unité de climatisation 13 est en mode « chaud ».

Le procédé d'ajustement de la température de l'air dans le compartiment voyageur 20 va maintenant être décrit.

Tout d'abord, l'ensemble de distribution 24 d'air injecte de l'air conditionné dans le compartiment voyageur 20.

Le système de commande 25 commande l'unité de climatisation 13 en fonction de la température de l'air dans le compartiment voyageur 20. La température de l'air à l'entrée de recyclage 34 est par exemple considérée comme la température de l'air dans le compartiment voyageur 20.

Lorsque la température de l'air dans le compartiment voyageur 20 est inférieure à la température cible T_c, le ventilateur chauffant 26 est activé.

Chaque ventilateur chauffant 26 force la circulation de l'air présent dans le compartiment voyageur 20 en le chauffant.

La température de l'air dans le compartiment voyageur 20 augmente.

Tant que la température de l'air dans le compartiment voyageur 20 n'a pas atteint la température cible T_c, le dispositif de production de chaud 28 augmente la température de sortie T_s.

Au contraire, lorsque la température dans le compartiment voyageur a atteint la température cible T_c et que la température à la sortie d'air 30 a atteint la température de sortie maximale T_s_max, le dispositif de production de chaud 28 n'augmente plus la puissance de sorte que la température de sortie T_s reste à une température inférieure à cette température de sortie maximale T_s_max.

Lorsque la température de l'air dans le compartiment voyageur 20 est égale ou est supérieure à la température cible T_c, elle désactive chaque ventilateur chauffant 26.

Grâce à l'invention décrite ci-dessus, la stagnation de l'air chaud près du plafond 14 est évitée. En effet, chaque ventilateur chauffant 26 situé près du plancher 16 chauffe de l'air dans la partie inférieure du compartiment voyageur 20, où les voyageurs sont situés. La limitation de la température de l'air à la sortie d'air 30 permet éviter un sur-échauffement de l'air près du plafond 14.

## Revendications

1. Voiture (12) de transport de voyageurs, par exemple voiture ferroviaire de transport de voyageurs, la voiture (12) comportant un plafond (14), un plancher (16), et deux parois latérales (18) définissant un compartiment voyageur (20), la voiture (12) comprenant :
- un ensemble de distribution (24) d'air conditionné pour l'injection d'air conditionné dans le compartiment voyageur (20), l'ensemble de distribution (24) comprenant au moins une sortie d'air (30) débouchant sur le plafond (14), et
- au moins un ventilateur chauffant (26) disposé à l'intérieur du compartiment voyageur (20), à proximité du plancher (16), chaque ventilateur chauffant (26) étant agencé pour force la circulation de l'air présent dans le compartiment voyageur (20) en le chauffant,
la voiture de transport (12) étant dépourvue de conduit ou de circuit aéraulique pour amener de l'air à chauffer au ventilateur chauffant (26) et de conduit ou de circuit aéraulique pour injecter de l'air chauffé par le ventilateur chauffant (26) dans le compartiment voyageur (20).

2. Voiture (12) selon la revendication 1, dans laquelle l'ensemble de distribution (24) d'air est dépourvu de conduit alimentant chaque ventilateur chauffant (26) en air conditionné.

3. Voiture (12) selon l'une quelconque des revendications précédentes, dans laquelle l'ensemble de distribution (24) d'air est alimenté en air conditionné par une unité de climatisation (13) possédant un mode « chaud » pour réchauffer l'air du compartiment voyageur (20) et un mode « froid » pour refroidir l'air du compartiment voyageur (20), chaque ventilateur chauffant (26) étant activé uniquement lorsque l'unité de climatisation (13) est en mode « chaud ».

4. Voiture (12) de véhicule de transport selon la revendication 3, dans laquelle chaque ventilateur chauffant (26) est apte à commuter entre un état de marche et un état d'arrêt, le ventilateur chauffant (26) occupant l'état de marche lorsque la température dans le compartiment passager (20) est inférieure à une température cible (T_c), le ventilateur chauffant (26) occupant l'état d'arrêt lorsque la température dans le compartiment passager (20) est supérieure à la température cible (T_c).

5. Voiture (12) selon la revendication 4, dans laquelle l'unité de climatisation (13) est configurée pour maintenir la température de sortie (T_s) de l'air conditionné inférieure à une température de sortie maximale (T_s_max) prédéterminée.

6. Voiture (12) selon la revendication 5, dans laquelle la température de sortie maximale (T_s_max) est définie par l'équation T_s_max - T_c = Delta_T, Delta_T étant supérieure ou égale à zéro.

7. Voiture (12) selon l'une quelconque des revendications précédentes, dans laquelle au moins une dite sortie d'air (30) de l'ensemble de distribution (24) d'air est orientée de manière à générer un flux d'air s'écoulant dans le compartiment voyageur (20) vers un ventilateur chauffant (26) correspondant.

8. Véhicule, notamment véhicule ferroviaire, comportant au moins une voiture (12) selon l'une quelconque des revendications précédentes.

9. Procédé d'ajustement de la température de l'air dans le compartiment voyageur (20) d'une voiture (12) selon l'une quelconque des revendications 1 à 7, le procédé d'ajustement comportant l'injection d'air conditionné dans le compartiment voyageur (20) à l'aide de l'ensemble de distribution (24) d'air, et le captage et le chauffage d'air présent dans le compartiment voyageur (20) à l'aide de chaque ventilateur chauffant (26).

10. Procédé d'ajustement selon la revendication 9, comportant le maintien de l'air conditionné injecté dans le compartiment voyageur (20) par l'ensemble de distribution (24) d'air à une température de sortie (T_s) inférieure à une température de sortie maximale (T_s_max) prédéterminée.
